# EUROPEAN PATENT APPLICATION

(11) **EP 1 239 316 A2**
(43) Date of publication of application: **11.09.2002**
(21) Application number: 02003776.8
(22) Date of filing: 20.02.2002
(51) Int. Cl.: G02B 6/44

(54) **Optical fiber storage reel**

(30) Priority: 28.02.2001 US 795212
(71) Applicant: Corning Cable Systems LLC, Hickory, North Carolina 28603-0489 (US)
(72) Inventor: Burns, Jennifer D., Ft. Worth, TX 76137 (US); Gordon, Carrie Lynn, Saginaw, TX 76179 (US); Hale, Virginia T., Granbury, TX 76048 (US)
(74) Representative: Sturm, Christoph, Dipl.-Ing.

(57) **Abstract**

An optical fiber storage reel includes an outer surface and an inner surface. A channel on the outer surface receives optical fiber and terminates in an exit port. The fiber is positioned within the channel and first routed to the exit port and then to the inner surface. The channel is S-shaped or teardrop-shaped so that the ends of the fiber transition from the exit port to the inner surface in the same direction. The storage reel may further include a wall between the outer surface and the inner surface that defines a hub. A splice holder may be provided on the outer surface. The storage reel may further include means for securing storage reels together in side-by-side relationship. The storage reel provides convenient, compact storage while maintaining the minimum bend radius of the optical fiber and access so that the stored fiber does not have to be manually routed.

## Description

### FIELD OF THE INVENTION

The present invention relates to fiber optic hardware and equipment, and more particularly, to an optical fiber storage reel for storing and protecting optical fiber cable and optical fiber ribbon.

### BACKGROUND OF THE INVENTION

An optical fiber storage reel may be used to store and protect excess lengths of optical fiber cable and optical fiber ribbon, collectively referred to herein as "optical fiber." An optical fiber storage reel may also be used to store and protect lengths of optical fiber that have been spliced. Optical fiber storage reels are often utilized in communications network enclosures, such as splice housings, distribution boxes, cross-connect cabinets, and splice closures. Ideally, an optical fiber storage reel is compact for efficient fiber storage and to maximize the space available inside the enclosure for other hardware and equipment. At the same time, however, an optical fiber storage reel must be large enough to provide a sufficient minimum bend radius, and thereby minimize transmission loss and protect the optical fiber from deterioration. An optical fiber storage reel should also accommodate the natural direction and orientation of coiled optical fiber ribbon while eliminating crossover, which may result in twisting and subsequent deterioration or breakage of the optical fiber within the ribbon.

While several types of optical fiber storage housings, organizers, spools, and reels are currently available, most are difficult to configure, and thus, are not technician friendly. Typically, the optical fiber must be laid out and routed throughout the enclosure before it is positioned and stored in the housing, organizer, spool, or reel. The manual routing process is both time-consuming and requires a technician with substantial expertise and experience. In addition, many available housings, organizers, spools, and reels have a cover that is hinged over the surface on which the optical fiber is positioned to protect the fiber from exposure and to prevent inadvertent removal or disruption of the orderly storage of the fiber. The presence of a cover does not permit ready access to a splice area. Furthermore, the cover does not allow the location of entrance and exit ports to vary significantly. Thus, the housing, organizer, spool, or reel is not readily adapted for use with previously existing fiber optic hardware and equipment. Finally, many of the available housings, organizers, spools, and reels are not configured to permit the optical fiber to change direction between the entrance port and the exit port. The resulting crossover causes the optical fiber ribbon to become twisted, resulting in subsequent deterioration and breakage of the fiber within the ribbon.

Accordingly, it is apparent a need exists for an optical fiber storage reel for storing and protecting optical fiber that is compact, yet large enough to minimize transmission loss and to adequately protect the optical fiber from deterioration, breakage, and other damage. It is further apparent a need exits for an optical fiber storage reel that accommodates the natural direction and orientation of coiled optical fiber ribbon, thereby eliminating crossover of the ribbon. It is still further apparent a need exists for an optical fiber storage reel that does not require the optical fiber to be manually routed prior to storage, permits ready access to the stored optical fiber, and is adaptable for use with previously existing fiber optic hardware and equipment.

The above objects, and others, will be realized and attained by the optical fiber storage reel particularly pointed out in the written description and claims hereof, as well as the appended drawings. The features and advantages of the invention, as well as others, will be set forth in the following description and will be made apparent from the disclosure provided herein, or may be learned by further practice of the invention by those having ordinary skill in the relevant art.

### SUMMARY OF THE INVENTION

The present invention resolves the problems and complexities presented by existing optical fiber storage reels. More specifically, the present invention overcomes the above limitations, and others, by providing an optical fiber storage reel that is compact for efficient fiber storage, yet is large enough to minimize transmission loss and adequately protect the optical fiber from deterioration, breakage, and other damage. In addition, the optical fiber storage reel of the invention accommodates the natural direction and orientation of coiled optical fiber ribbon. The optical fiber storage reel of the invention does not require the optical fiber to be laid out and routed throughout the enclosure prior to storage, and thus, is technician friendly. Furthermore, the optical fiber storage reel provides ready access to the optical fiber, is adaptable for use with previously existing fiber optic hardware and equipment, and permits the direction of travel of the optical fiber to change between the entrance port and the exit port. As such, the present invention provides an optical fiber storage reel for storing and protecting optical fiber that is efficient, convenient, simple to use and adaptable for use in various communications network enclosures.

To achieve these and other advantages, and in accordance with the purpose of the invention as embodied and broadly described herein, the present invention is directed to an optical fiber storage reel for storing and protecting optical fiber cable or optical fiber ribbon. The storage reel includes an outer surface and an inner surface. A channel on the outer surface receives the optical fiber and terminates in an exit port. The optical fiber received within the channel is routed first to the exit port and then from the exit port to the inner surface. Preferably, the channel is defined by a pair of spaced apart walls depending outwardly from the outer surface. The channel includes an S-shaped portion or a teardrop-shaped portion wherein a medial portion of the optical fiber is received within the channel such that the ends of the optical fiber transition from the exit port to the inner surface in the same direction. This feature of the invention maintains the minimum bend radius of the optical fiber and is particularly desirable when the optical fiber is in the form of a ribbon to eliminate crossover, and thereby minimize deterioration and breakage of the fiber within the ribbon.

In one embodiment, the storage reel further includes a lower portion having the inner surface and an upper portion having the outer surface that is rotatably attached to the lower portion. The upper portion further has a plurality of arcuate, resilient tabs depending inwardly from the center of the inner surface and the lower portion has a central opening opposite the tabs that is appropriately sized to receive the tabs therein. The upper portion further has a circumferential lip or a plurality of circumferentially spaced, radially depending flanges and the lower portion comprises a wall depending inwardly from the inner surface. The wall is positioned radially outwardly of the upper portion and has an interior groove for receiving the lip formed on the upper portion so that the upper portion rotates freely relative to lower portion.

In other embodiments, the storage reel may further include means for releasably retaining a plurality of the storage reels in side-by-side relationship within an enclosure for convenient, compact storage of a plurality of optical fibers. In one embodiment, the retaining means consists of a pivot clamp, a grasping clamp, and a grip. The pivot clamp pivotally engages the enclosure and the grasping clamp releasable engages the enclosure. When a force is exerted on the grip, the grasping clamp releases from the enclosure and the pivot clamp pivots the storage outwardly from the enclosure to permit access to the stored optical fiber. In another embodiment, the outer surface has a plurality of outwardly depending first projections and the inner surface has a plurality of outwardly depending second projections. The second projections are appropriately positioned and sized to cooperate with the first projections of an adjacent storage reel to secure two or more storage reels together in side-by-side relationship for convenient, compact storage of a plurality of optical fibers.

In still other embodiments, the outer surface and the inner surface may be separated by a hub having a radius greater then the minimum bend radius of the optical fiber for winding slack optical fiber thereon. Preferably, the outer surface and the inner surface each have a plurality of radially depending, circumferentially spaced flanges and a pair of opposed openings are provided between adjacent flanges of the outer surface to permit the optical fiber to transition from a pair of exit ports onto the hub. The storage reel may further include a splice holder within the channel to retain a splice joining the ends of a pair of optical fibers.

Although specific embodiments of the invention are illustrated and described herein, it is to be understood that both the foregoing general description and the following detailed description are merely exemplary and explanatory and are included for the intended purpose of providing further explanation of the invention as claimed.

### BRIEF DESCRIPTION OF THE DRAWINGS

The accompanying drawings, which constitute a part of this disclosure, are included to provide a further understanding of the invention and to illustrate one or more embodiments of the invention in which:
FIG. 1 is an exploded top perspective view of a first embodiment of an optical fiber storage reel according to the present invention;
FIG. 2 is an exploded bottom perspective view of the storage reel of FIG. 1;
FIG. 3 is a top plan view of the optical fiber storage reel of FIG. 1;
FIG. 4 is a bottom plan view of the optical fiber storage reel of FIG. 1;
FIG. 5 is an exploded top perspective view of a second embodiment of an optical fiber storage reel according to the invention;
FIG. 6 is a top plan view of the optical fiber storage reel of FIG. 5;
FIG. 7 is a top plan view of a third embodiment of an optical fiber storage reel according to the invention;
FIG. 8 is a side elevation view of the optical fiber storage reel of FIG. 7;
FIG. 9 is a top perspective view of a fourth embodiment of an optical fiber storage reel according to the invention that includes a splice holder and apertures and projections for interlocking a plurality of the storage reels; and
FIG. 10 is a bottom perspective view of the optical fiber storage reel of FIG. 9.

### DETAILED DESCRIPTION OF THE EMBODIMENTS

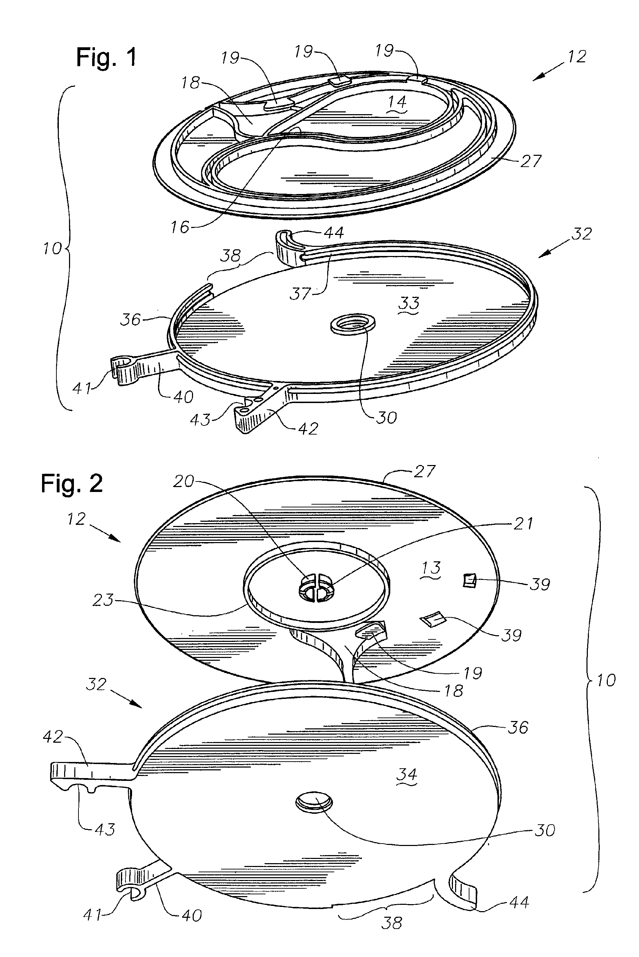

A first embodiment of an optical fiber storage reel, indicated generally at 10, is shown in FIGS. 1-4. Storage reel 10 comprises an upper portion 12 and a lower portion 32 each made of a substantially rigid material, such as metal or hard plastic. Upper portion 12 and lower portion 32 may be machined, but preferably are molded, into relatively thin, generally circular discs and attached at their centers such that upper portion 12 is rotatable relative to lower portion 32. Upper portion 12 comprises an outer surface 14 (FIG. 1) and an inner surface 13 (FIG. 2). Similarly, lower portion 32 comprises an inner surface 33 (FIG. 1) and an outer surface 34 (FIG. 2). Preferably, upper portion 12 has a plurality of arcuate, resilient tabs 20 that depend inwardly from the center of inner surface 13 and lower portion 32 has an opening 30 located at its center opposite the tabs 20. Opening 30 is appropriately sized to receive tabs 20 such that radially extending projections 21 engage the outer surface 34 of lower portion 32. Tabs 20 are received within opening 30 and projections 21 engage lower portion 32 with minimal friction so that upper portion 12 rotates freely relative to lower portion 32.

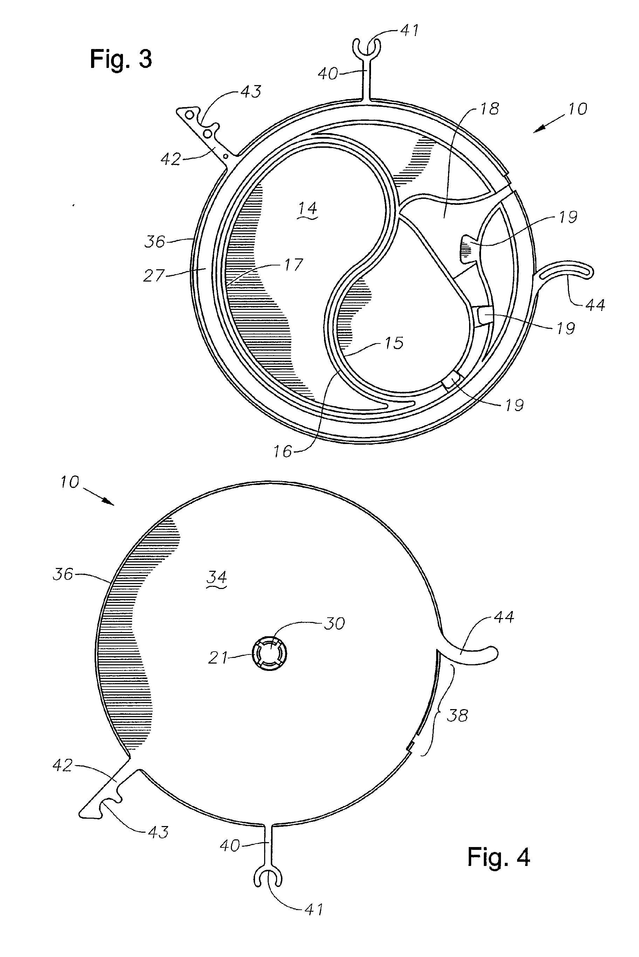

As best shown in FIG. 3, the outer surface 14 of upper portion 12 of storage reel 10 comprises a teardrop-shaped channel 16 for retaining an optical fiber (not shown). The channel 16 has a radius of curvature along its entire length that exceeds the minimum bend radius of the optical fiber. Accordingly, the minimum bend radius of an optical fiber positioned within the channel 16 is not exceeded, thereby minimizing transmission loss and preventing deterioration of the optical fiber. Although the channel 16 as shown traverses the outer surface 14 in a teardrop shape, the channel 16 may have any convenient shape that does not violate the minimum bend radius of the optical fiber. Regardless, the channel 16 terminates in an exit port 18 that permits the optical fiber to transition from the upper portion 12 to the lower portion 32 of the storage reel 10, as will be described. The channel 16 is preferably defined by a pair of raised walls 15, 17 depending outwardly from and generally perpendicularly to the outer surface 14. For ease or convenience of manufacture, the channel 16 may further comprise extensions of raised walls 15, 17 or additional raised walls that are integrally formed with walls 15, 17. Guide and retention tabs 19 may also be provided adjacent exit port 18 to guide the transition of the optical fiber from the upper portion 12 to the lower portion 32 of the storage reel 10 and to restrain the optical fiber from moving laterally or outwardly from the exit port 18 when an axial force is applied to the optical fiber.

The lower portion 32 of the optical fiber storage reel 10 comprises a smooth inner surface 33 for receiving and storing excess lengths of optical fiber, commonly referred to in the art as "slack" fiber. Lower portion 32 further comprises a wall 36 depending inwardly from and generally perpendicular to inner surface 33. Wall 36 is positioned on lower portion 32 radially outwardly of upper portion 12 and has an interior groove 37 for receiving a circumferential lip 27 formed on upper portion 12. Lip 27 is received in groove 37 such that upper portion 12 rotates freely relative to lower portion 32 while maintaining the optical fiber between inner surface 13 of upper portion 12 and inner surface 33 of lower portion 32. As best shown in FIG. 2, upper portion 12 may comprise a circular wall 23 depending inwardly from and generally perpendicular to inner surface 13. However, wall 23 may depend inwardly from inner surface 33. When circumferential lip 27 is received within interior groove 37 and upper portion 12 is rotatably attached to lower portion 32, wall 23 defines a hub between inner surface 13 of upper portion 12 and inner surface 33 of lower portion 32 for winding slack optical fiber thereon. Hub 23 may have any desired diameter that is somewhat greater than the diameter of opening 30, but somewhat less than the diameter of wall 36. Since optical fiber cable is typically thicker than optical fiber ribbon, hub 23 will generally have a smaller diameter when configured to receive slack optical fiber cable and a relatively larger diameter when configured to receive slack optical fiber ribbon. An opening 38 is formed in a circumferential segment of wall 33 of lower portion 32.

Importantly, the channel 16 comprises an S-shaped central portion that traverses the top surface 14 of the upper portion 12 of the storage reel 10. The S-shaped central portion of the channel 16 is commonly referred to in the art as a "Ying-yang" because it causes the direction of the optical fiber to reverse between the exit port. Accordingly, the ends of a length of optical fiber cable or optical fiber ribbon positioned in the channel 16 will be parallel to one another and extending in the same direction when they enter the exit port 18 from the channel 16. The Ying-yang configuration of channel 16 is especially desirable when storing and protecting optical fiber ribbon because it eliminates crossover of the ribbon, which may result in twisting and subsequent deterioration or breakage of the optical fiber within the ribbon. The Ying-yang configuration of the channel 16 also permits the optical fiber to transition smoothly from the outer surface 14 of the upper portion 12 to the inner surface 33 of the lower portion 32 of the storage reel 10.

In operation, a medial portion of an excess length of optical fiber is positioned within the channel 16 on the outer surface 14 of upper portion 12. Preferably, the optical fiber is positioned first in the S-shaped central portion of channel 16 and the ends of the optical fiber are then routed radially outwardly in the direction of the exit port 18. Thus, the ends of the optical fiber extend into the exit port 18 beneath the guide and retention tabs 19 in the same direction and parallel to one another. When upper portion 12 is rotatably attached to lower portion 32, and exit port 18 is aligned with opening 38, the ends of the optical fiber extend out of the exit port 18 and through the opening 38. By rotating upper portion 12 relative to lower portion 32 in a clockwise direction about a longitudinal axis through opening 30, the optical fiber is drawn into the cavity between inner surface 13 of upper portion 12 and inner surface 33 of lower portion 32. As the optical fiber is drawn into the cavity, it is wound around hub 23 of upper portion 12. Thus, an excess length of the optical fiber can be stored within the optical fiber storage reel 10 and protected from possible deterioration, breakage, and damage that might occur if the slack optical fiber were stored in a conventional manner, such as wrapped around fiber storage hubs provided on the interior surface of the enclosure. If desired, the optical fiber may be restrained in a known manner to prevent the optical fiber from being unwound from hub 23 until the excess length is needed, for example to form a splice with another optical fiber. In particular, guide and retention tabs 19 may be bent downwardly to exert a predetermined amount of pressure sufficient to bind the optical fiber against openings 39 (FIG. 2) formed in lower portion 32 opposite guide and retention tabs 19.

Optical fiber storage reel 10 may further comprise means for releasably retaining a plurality of storage reels 10 in side-by-side relationship for convenient, compact storage of a corresponding plurality of optical fibers. As shown herein, lower portion 32 of optical fiber storage reel 10 may comprise a pivot clamp 40, a releasable grasping clamp 42 and a grip 44. Pivot clamp 40, grasping clamp 42, and grip 44 are fixed to lower portion 32, and preferably, are integrally formed therewith. Pivot clamp 40 has a semicircular outer end portion 41 for pivotally engaging a first small diameter, circular, mounting rod (not shown) affixed, for example, within an enclosure. Grasping clamp 42 has a semicircular outer end portion 43 for releasably engaging a second small diameter, circular, mounting rod (not shown) affixed, for example, within the same enclosure. The grasping clamp 42 is sufficiently resilient to release from the second mounting rod when a downward force is exerted on the grip 44 and the pivot clamp 40 pivots about the first mounting rod. Thus, the entire optical fiber storage reel 10 may be pivoted outwardly away from an adjacent optical fiber storage reel 10 positioned on the first and second mounting rods. Pivoting the optical fiber storage reel 10 exposes the outer surface 14 of the upper portion 12 to wind or unwind the optical fiber on hub 23. It should be noted that in this configuration, the walls 15, 17 of the S-shaped central portion of channel 16 provide readily accessible points of contact for gripping and rotating upper portion 12 relative to lower portion 32.

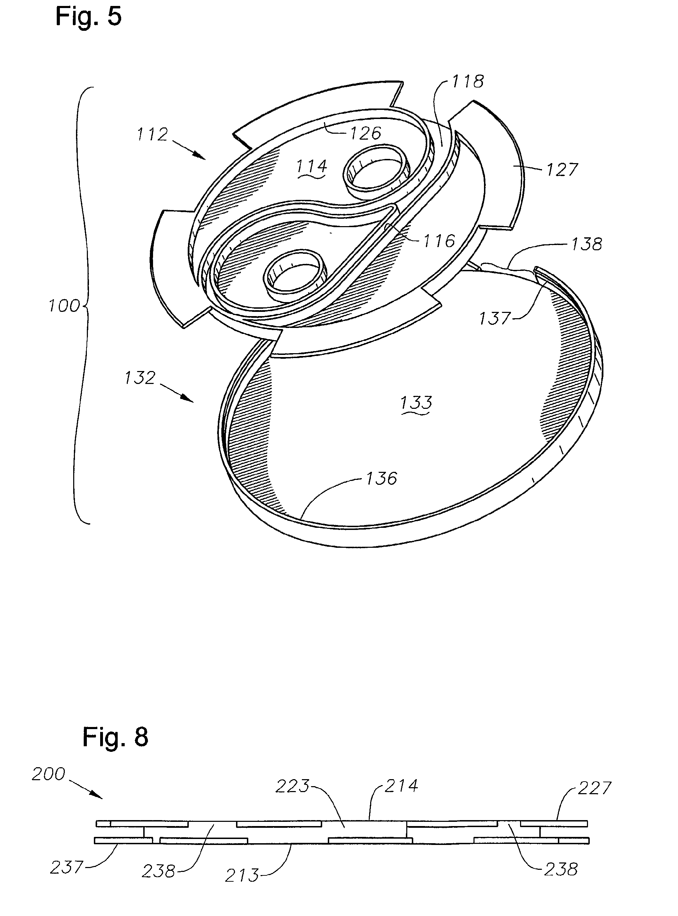

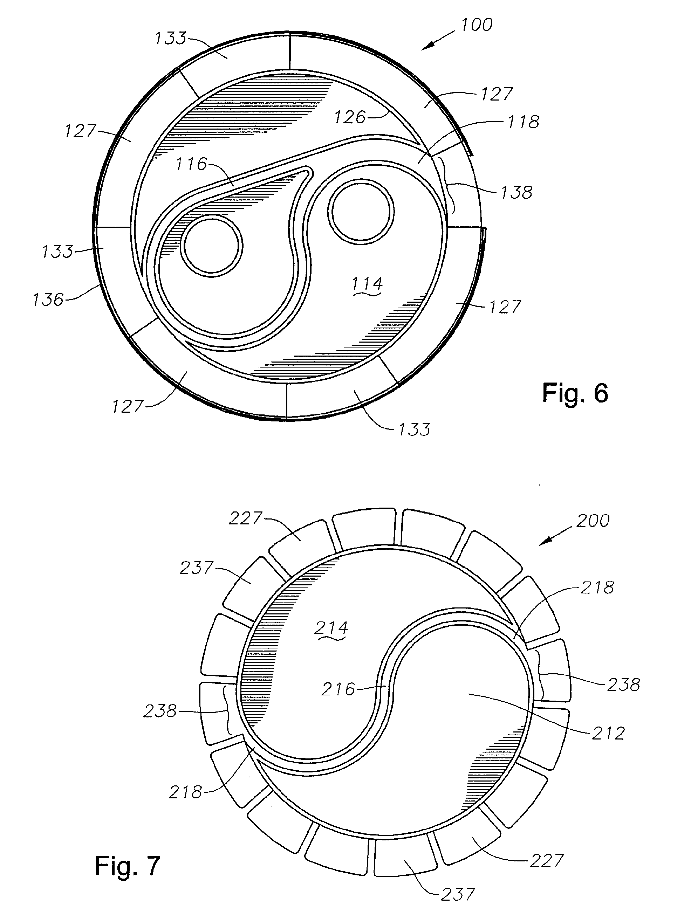

A second embodiment of an optical fiber storage reel 100 is shown in FIGS. 5 and 6. Storage reel 100 is similar to storage reel 10 in many respects, the details of which have been previously described. Accordingly, only the differences between storage reel 10 and storage reel 100 will described herein. Storage reel 100 comprises an upper portion 112 having an outer surface 114 and a lower portion 132 having an inner surface 133. A teardrop-shaped channel 116 is positioned on outer surface 114 of upper portion 112 for receiving optical fiber therein. It should be noted that channel 116 does not comprise an S-shaped central portion, and thus, is substantially smaller than channel 16 of optical fiber storage reel 10. As a result, the diameter of optical fiber storage reel 100 can be made smaller than the diameter of optical fiber storage reel 10. Accordingly, the optical fiber storage reel 100 is compact for more efficient optical fiber storage and for maximizing the space available inside the enclosure for other hardware and equipment. Channel 116 terminates in an exit port 118 adjacent the radial outer edge of the outer surface 114. Upper portion 112 comprises a wall 126 depending outwardly from and generally perpendicular to outer surface 114. A plurality of elevated circumferentially spaced flanges 127 depend radially outwardly from wall 126 and generally parallel to outer surface 114.

Lower portion 132 of optical fiber storage reel 100 comprises wall 136 depending outwardly from and generally perpendicular to inner surface 133. Wall 136 is positioned on lower portion 132 radially outwardly of upper portion 112 and has an interior groove 137 for receiving flanges 127 formed on upper portion 112. Flanges 127 are received in groove 137 such that upper portion 112 rotates freely relative to lower portion 132 while maintaining the optical fiber between inner surface (not shown) of upper portion 112 and inner surface 133 of lower portion 132. As previously described, upper portion 112 may comprise a circular wall (not shown) depending inwardly from and generally perpendicular to upper portion 112 or lower portion 132 that defines a hub between the inner surface of the upper portion 112 and the inner surface 133 of the lower portion 132 for winding slack optical fiber thereon. An opening 138 (FIG. 5) is formed in a circumferential segment of wall 136 of lower portion 132.

In operation, a medial portion of an excess length of optical fiber is positioned within the channel 116 on the outer surface 114 of upper portion 112 and the ends of the optical fiber are then routed radially outwardly in the direction of the exit port 118. Thus, the ends of the optical fiber extend into the exit port 118 in the same direction and parallel to one another, as previously described. When upper portion 112 is rotatably attached to lower portion 132 and exit port 118 is aligned with opening 138 in wall 136, the ends of the optical fiber extend out of the exit port 118 and through the opening 138. By rotating upper portion 112 relative to lower portion 132 in a clockwise direction about a longitudinal axis, the optical fiber is drawn into the cavity between the inner surface of upper portion 112 and the inner surface 133 of lower portion 132. Thus, an excess length of the optical fiber can be stored within the optical fiber storage reel 100 and protected from possible deterioration, breakage, and damage. If desired, the optical fiber may be restrained in a known manner to prevent the optical fiber from being inadvertently removed from the optical fiber storage reel 100 until the excess length is needed, for example to form a splice with another optical fiber. Optical fiber storage reel 100 may further comprise means for releasably retaining a plurality of storage reels 100 in side-by-side relationship, as previously described.

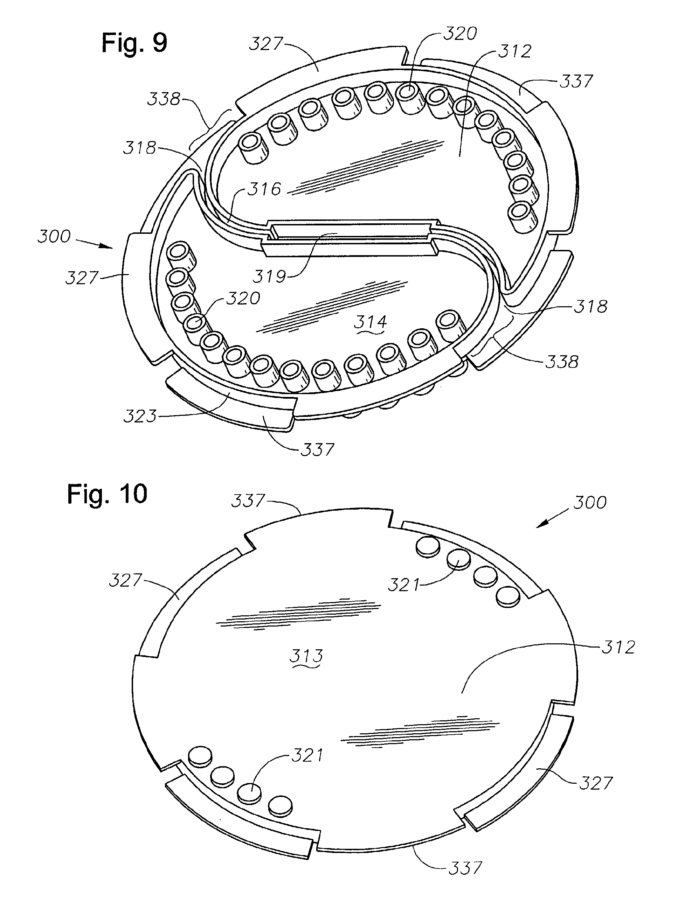

A third embodiment of an optical fiber storage reel 200 is shown in FIGS. 7 and 8. Storage reel 200 is similar to storage reel 10 and storage reel 100 in many respects, the details of which have been previously described. Storage reel 200 comprises an integrally formed body 212 having an outer surface 214 and an inner surface 213 separated by a central disc 223 that defines a hub between outer surface 214 and inner surface 213. An S-shaped channel 216 is positioned on outer surface 214 for receiving optical fiber therein. Channel 216 extends between and terminates in a pair of exit ports 228 adjacent opposite radial outer edges of the outer surface 214. A plurality of circumferentially spaced flanges 227 depend radially outwardly from and generally parallel to outer surface 214. Similarly, a plurality of circumferentially spaced flanges 237 depend radially outwardly from and generally perpendicular to inner surface 213. A pair of opposed openings 238 are provided between adjacent flanges 227 to permit optical fiber to transition from exit ports 218 onto hub 223.

In operation, a medial portion of an excess length of optical fiber is positioned within the channel 216 on the outer surface 214 of optical fiber storage reel 200 and the ends of the optical fiber are then routed radially outwardly in the direction of the exit ports 218. As a result of the "Ying-yang" configuration of channel 216, the ends of the optical fiber extend into the exit ports 218 in opposite directions and parallel to one another. However, when the ends of the optical fiber are wrapped, or wound, around the hub 223 in a clockwise direction, the ends become parallel to one another, as previously described. Preferably, flanges 227 are circumferentially skewed relative to flanges 237 so that an optical fiber wound around hub 223 is continuously restrained against lateral movement off hub 223. Thus, an excess length of the optical fiber can be stored on the optical fiber storage reel 200 and protected from possible deterioration, breakage, and damage. If desired, the optical fiber may be restrained in a known manner to prevent the optical fiber from being inadvertently removed from the optical fiber storage reel 100 until the excess length is needed, for example to form a splice with another optical fiber. Optical fiber storage reel 200 may further comprise means for releasably retaining a plurality of storage reels 200 in side-by-side relationship, as previously described.

A fourth embodiment of an optical fiber storage reel 300 is shown in FIGS. 9 and 10. Storage reel 300 is similar to storage reel 200 in many respects, the details of which have been previously described. Storage reel 300 comprises an integrally formed body 312 having an outer surface 314 (FIG. 9) and a inner surface 313 (FIG. 10) separated by a central disc 323 that defines a hub between outer surface 314 and inner surface 313. An S-shaped channel 316 is positioned on outer surface 314 for receiving optical fiber therein. Channel 316 extends between and terminates in a pair of exit ports 318 adjacent opposite radial outer edges of the outer surface 314. A splice holder 319 is provided within channel 316 medially between exit ports 318. Splice holder 319 retains a splice formed between the ends of a pair of optical fibers. The splice may be made by any known process, such as fusion splicing, for joining optical fibers. A plurality of elevated circumferentially spaced flanges 327 depend radially outwardly from and generally parallel to outer surface 314. Similarly, a plurality of elevated circumferentially spaced flanges 337 depend radially outwardly from and generally perpendicular to inner surface 313. A pair of opposed openings 338 are provided between adjacent flanges 327 to permit optical fiber to transition from exit ports 318 onto hub 323. In addition, a plurality of projections 320 (FIG. 9) depend outwardly from and generally perpendicular to outer surface 314. Similarly, a plurality of appropriately positioned projections 321 (FIG. 10) depend outwardly from and generally perpendicular to inner surface 313. Projection 320 cooperate with projections 321 of an adjacent optical fiber storage reel 300 to secure two or more storage reels 300 together in side-by-side relationship for convenient, compact storage of a corresponding plurality of optical fibers.

In operation, a medial portion of the excess lengths of optical fibers that have been spliced together is positioned within the channel 316 on the outer surface 314 of optical fiber storage reel 300 and the lengths of the optical fibers are then routed radially outwardly in the direction of the exit ports 318. As a result of the "Ying-yang" configuration of channel 316, the lengths of the optical fibers extend into the exit ports 318 in opposite directions and parallel to one another. However, when the lengths of the optical fibers are wrapped, or wound, around the hub 323 in a clockwise direction, the lengths become parallel to one another, as previously described. Preferably, flanges 327 are circumferentially skewed relative to flanges 337 so that the optical fibers wound around hub 323 are continuously restrained against lateral movement off hub 323. Thus, excess lengths of optical fibers that have been spliced can be stored on the optical fiber storage reel 300 and protected from possible deterioration, breakage, and damage. If desired, the optical fibers may be restrained in a known manner to prevent the optical fibers from being inadvertently removed from the optical fiber storage reel 300 until the excess length is needed. Optical fiber storage reel 300 further comprises projections 320 and 321 previously described for releasably retaining a plurality of storage reels 300 in side-by-side relationship.

Although the invention has been described for the purpose of illustration in sufficient detail to enable one of ordinary skill in the art to make and use the invention, it is to be understood that the invention is not to be construed as being limited to the particular embodiments described and illustrated herein. Instead, it is intended that variations may be made by those of ordinary skill in the art without departing from the spirit and scope of the invention as defined by the following claims, including any and all equivalents thereof.

## Claims

1. An optical fiber storage reel comprising:
a lower portion having an inner surface;
an upper portion having an outer surface and an inner surface, the upper portion rotatably attached to the lower portion;
a channel on the outer surface of the upper portion for receiving optical fiber, the channel terminating in an exit port;
wherein the optical fiber received in the channel is routed first to the exit port and then from the exit port to the inner surface of the lower portion.

2. The optical fiber storage reel of claim 1 wherein the channel is defined by a pair of spaced apart walls depending outwardly from the outer surface of the upper portion.

3. The optical fiber storage reel of claim 1 wherein the channel comprises an S-shaped portion and wherein a medial portion of the optical fiber is received within the channel such that the ends of the optical fiber transition from the exit port to the inner surface in the same direction.

4. The optical fiber storage reel of claim 1 wherein the channel comprises a teardrop-shaped portion and wherein a medial portion of the optical fiber is received within the channel such that the ends of the optical fiber transition from the exit port to the inner surface in the same direction.

5. The optical fiber storage reel of claim 1 wherein a splice holder is provided within the channel to retain a splice joining the ends of a pair of optical fibers.

6. The optical fiber storage reel of claim 1 wherein the lower portion comprises a pivot clamp, a grasping clamp, and a grip for releasably retaining a plurality of the storage reels in side-by-side relationship within an enclosure for convenient, compact storage of a plurality of optical fibers, the pivot clamp pivotally engaging the enclosure and the grasping clamp releasably engaging the enclosure such that the storage reel pivots outwardly when a force is exerted on the grip.

7. The optical fiber storage reel of claim 1 further comprising a hub between the inner surface of the upper portion and the inner surface of the lower portion for winding slack optical fiber thereon.

8. The optical fiber storage reel of claim 1 wherein the upper portion further has a plurality of arcuate, resilient tabs depending inwardly from the center of the inner surface and wherein the lower portion has a central opening opposite the tabs that is appropriately sized to receive the tabs therein so that the upper portion rotates freely relative to the lower portion.

9. The optical fiber storage reel of claim 1 wherein the upper portion further has a circumferential lip formed thereon and wherein the lower portion comprises a wall depending inwardly from the inner surface, the wall positioned radially outwardly of the upper portion and having an interior groove for Oreceiving the lip formed on the upper portion so that the upper portion rotates freely relative to lower portion.

10. The optical fiber storage reel of claim 1 wherein the upper portion further has a plurality of circumferentially spaced, radially depending flanges and wherein the lower portion comprises a wall depending inwardly from the inner surface, the wall positioned radially outwardly of the upper portion and having an interior groove for receiving the lip formed on the upper portion so that the upper portion rotates freely relative to lower portion.

11. The optical fiber storage reel of claim 1 wherein the optical fiber is selected from the group consisting of optical fiber cable and optical fiber ribbon.
